# EUROPEAN PATENT APPLICATION

(11) **EP 4 668 350 A1**
(43) Date of publication of application: **24.12.2025**
(21) Application number: 23931545.0
(22) Date of filing: 07.04.2023
(51) Int. Cl.: H01M 4/13

(54) **SECONDARY BATTERY AND ELECTRIC DEVICE**

(71) Applicant: Contemporary Amperex Technology Co., Limited, Ningde, Fujian 352100 (CN)
(72) Inventor: LV, Zijian, Ningde, Fujian 352100 (CN); WANG, Jiazheng, Ningde, Fujian 352100 (CN); DENG, Jingxian, Ningde, Fujian 352100 (CN)
(74) Representative: Gong, Jinping
(86) International application number: PCT/CN2023/087043
(87) International publication number: WO 2024/207484

(57) **Abstract**

A secondary battery. The secondary battery comprises a negative electrode sheet, wherein the negative electrode sheet comprises a negative electrode current collector and a negative electrode film layer. The negative electrode film layer is provided with a first surface close to the negative electrode current collector and a second surface arranged opposite to the first surface; and the thickness of the negative electrode film layer is denoted as H, a region from the first surface of the negative electrode film layer to a thickness range of 0 3H is denoted as a first region of the negative electrode film layer, and a region from the second surface of the negative electrode film layer to a thickness range of 0.3H is denoted as a second region of the negative electrode film layer. The first region comprises a first active material, the second region comprises a second active material, the first active material comprises a siloxy material, and the second active material comprises a silicon-carbon composite material.

## Description

### TECHNICAL FIELD

The present application relates to the technical field of batteries, and in particular, to a secondary battery and an electric device.

### BACKGROUND

In recent years, with the increasingly widespread application of secondary batteries, they have been extensively used in energy storage power systems such as hydropower, thermal power, wind power, and solar power stations, as well as in various fields such as electric tools, electric bicycles, electric motorcycles, electric vehicles, military equipment, and aerospace.

Silicon-based materials are considered promising negative electrode active materials; however, their volume expansion during use adversely affects the cycle performance of batteries.

### SUMMARY

In view of the issue described above, the present application provides a novel negative electrode plate, a secondary battery, and an electric device, which are described below, respectively.

In a first aspect, the present application provides a secondary battery, including a negative electrode plate, where the negative electrode plate includes a negative electrode current collector and a negative electrode film layer, the negative electrode film layer has a first surface proximal to the negative electrode current collector and a second surface arranged opposite to the first surface, a thickness of the negative electrode film layer is denoted as H, a region extending from the first surface of the negative electrode film layer to a thickness range of 0.3 H is defined as a first region of the negative electrode film layer, a region extending from the second surface of the negative electrode film layer to a thickness range of 0.3 H is defined as a second region of the negative electrode film layer,
the first region includes a first active material, the second region includes a second active material,
the first active material includes a silicon-oxygen-based material, and the second active material includes a silicon-carbon composite material.

Compared to the silicon-carbon composite material, the silicon-oxygen-based material exhibits higher energy density. Compared to the silicon-oxygen-based material, the silicon-carbon composite material exhibits better structural stability, better electrolytic solution interface performance, and better cycle performance. When the first region of the negative electrode film layer contains the silicon-oxygen-based material and the second region contains the silicon-carbon composite material, the respective advantages of the two materials can be fully utilized, and the respective deficiencies of the two materials can be mutually compensated, such that the cycle performance and the fast-charging performance of the secondary battery can be significantly enhanced. Without being limited by theory, the silicon-oxygen-based material in the first region enhances the compaction density of the electrode plate, and the silicon-carbon composite material in the second region can be fully contacted with the electrolytic solution, thereby maintaining good structural stability during long-term cycling and improving the cycle performance of the battery.

In some embodiments, a mass percentage of the silicon-oxygen-based material in the first active material is denoted as A1, and a mass percentage of the silicon-carbon composite material in the second active material is denoted as A2, where A2/A1 ≤ 2, and optionally, 0.2 ≤A2/A1 ≤ 0.8. Within the above range, the silicon-oxygen-based material and the silicon-carbon composite material exhibit a further enhanced synergistic effect. Based on this scheme, the secondary battery exhibits further enhanced cycle performance and/or fast-charging performance.

In some embodiments, the mass percentage of the silicon-oxygen-based material in the first active material is less than or equal to 30 wt%, optionally 10 wt% to 25 wt%; and/or the mass percentage of the silicon-carbon composite material in the second active material is less than or equal to 25 wt%, optionally 5 wt% to 20 wt%. Within the above range, the silicon-oxygen-based material and the silicon-carbon composite material exhibit a further enhanced synergistic effect. Within the above range, the silicon-oxygen-based material and the silicon-carbon composite material exhibit a further enhanced synergistic effect. Based on this scheme, the secondary battery exhibits further enhanced cycle performance and/or fast-charging performance.

In some embodiments, a volume average particle size Dv50 of the silicon-carbon composite material is greater than a volume average particle size Dv50 of the silicon-oxygen-based material. By configuring the silicon-carbon composite material to have a volume average particle size Dv50 greater than the volume average particle size Dv50 of the silicon-oxygen-based material, a desirable compaction density difference between the second region and the first region of the negative electrode film layer can be achieved. As a result, the porosity of the negative electrode film layer in the thickness direction better matches the ion concentration distribution, which improves the wettability and the retention characteristics of the negative electrode film layer for the electrolytic solution and facilitates ion transport, thereby enabling the secondary battery to exhibit better cycle performance and/or fast-charging performance.

In some embodiments, a powder compaction density of the silicon-carbon composite material tested under a pressure of 3 × 10⁴ N is less than that of the silicon-oxygen-based material tested under a pressure of 3 × 10⁴ N. By configuring the silicon-carbon composite material to have a compaction density greater than that of the silicon-oxygen-based material, the second region and the first region of the negative electrode film layer are provided with a favorable pore structure, which better matches the ion concentration distribution in the thickness direction of the negative electrode film layer, improving the wettability and the retention characteristics of the negative electrode film layer for the electrolytic solution, and further facilitating ion transport, thereby enabling the secondary battery to exhibit better cycle performance and/or fast-charging performance.

In some embodiments, a tap density of the silicon-carbon composite material is less than that of the silicon-oxygen-based material. By configuring the silicon-carbon composite material to have a tap density less than that of the silicon-oxygen-based material, the pore structure of the negative electrode film layer in the thickness direction can be optimized, improving the wettability and the retention characteristics of the negative electrode film layer for the electrolytic solution, and further facilitating ion transport, thereby enabling the secondary battery to exhibit better cycle performance and/or fast-charging performance.

In some embodiments, a specific surface area of the silicon-carbon composite material is greater than that of the silicon-oxygen-based material. By configuring the silicon-carbon composite material to have a specific surface area greater than that of the silicon-oxygen-based material, ions can rapidly migrate to the first region of the negative electrode plate, and side reactions are reduced, thereby enabling the secondary battery to exhibit better cycle performance and/or fast-charging performance.

In some embodiments, a powder resistivity of the silicon-carbon composite material tested under a pressure of 16 MPa is greater than that of the silicon-oxygen-based material tested under a pressure of 16 MPa. By configuring the silicon-carbon composite material to have a powder resistivity greater than that of the silicon-oxygen-based material, the electronic conductivity of the negative electrode film layer can be improved, thereby further enhancing the fast-charging performance of the secondary battery.

In some embodiments, the silicon-carbon composite material includes a carbon matrix and a silicon-based material disposed in the carbon matrix. Based on this scheme, the secondary battery exhibits further enhanced cycle performance.

In some embodiments, an initial coulombic efficiency of the silicon-carbon composite material is ≥ 90 wt%, optionally 91 wt% to 94 wt%. Based on this scheme, the secondary battery exhibits further enhanced initial coulombic efficiency.

In some embodiments, a volume particle size Dv50 of the silicon-carbon composite material is 3 µm to 15 µm, optionally 5 µm to 12 µm. The particle size range described above is conducive to improving the ionic and electronic transport properties of the material, such that the fast-charging performance of the secondary battery can be further enhanced; additionally, the specific surface area of the material can be reduced, and side reactions can be reduced, thereby further enhancing the cycle performance of the secondary battery.

In some embodiments, a volume particle size Dv90 of the silicon-carbon composite material is ≤ 60 µm, optionally 20 µm to 40 µm. When the volume distribution particle size Dv90 of the material falls within the above range, the particle uniformity is relatively good, which improves the ionic and electronic transport properties, thereby further enhancing the fast-charging performance of the secondary battery.

In some embodiments, a particle size distribution (Dv90-Dv10)/Dv50 of the silicon-carbon composite material is 1.0 to 3.0, optionally 1.0 to 2.0. When the (Dv90-Dv10)/Dv50 of the material falls within the above range, the particle packing efficiency is relatively good, which enhances the compaction density of the negative electrode film layer, thereby further increasing the energy density of the secondary battery; additionally, this enables the negative electrode film layer to have an appropriate pore structure, thereby further enhancing the fast-charging performance of the secondary battery.

In some embodiments, a BET specific surface area of the silicon-carbon composite material is less than or equal to 20 m²/g, optionally 1 m²/g to 10 m²/g. When the specific surface area of the material falls within the above range, side reactions are reduced, thereby enabling the secondary battery to have better cycle performance.

In some embodiments, a powder resistivity of the silicon-carbon composite material under a pressure of 16 MPa is ≤ 300 Ω·cm, optionally ≤ 50 Ω·cm. Based on this scheme, the electronic conductivity of the negative electrode film layer can be improved, thereby further enhancing the fast-charging performance of the secondary battery.

In some embodiments, a tap density of the silicon-carbon composite material is 0.8 g/cm³ to 1.0 g/cm³, optionally 0.9 g/cm³ to 1.0 g/cm³. When the tap density falls within the above range, the compaction density of the negative electrode film layer can be increased, thereby further increasing the energy density of the secondary battery; additionally, this enables the negative electrode film layer to have an appropriate pore structure, which improves the ionic and electronic transport properties, and improves the wettability and the retention characteristics of the negative electrode film layer for the electrolytic solution, thereby further enhancing the fast-charging performance and/or cycle performance of the secondary battery.

In some embodiments, a silicon element content in the silicon-carbon composite material is greater than or equal to 30 wt%, optionally 40 wt% to 60 wt%. Based on this, the silicon-carbon composite material exhibits desirable electrochemical performance.

In some embodiments, a carbon element content in the silicon-carbon composite material is greater than or equal to 40 wt%, optionally 45 wt% to 60 wt%. Based on this, the silicon-carbon composite material exhibits desirable electrochemical performance.

In some embodiments, an oxygen element content in the silicon-carbon composite material is less than or equal to 10 wt%, optionally 1 wt% to 5 wt%. Based on this, the silicon-carbon composite material exhibits desirable electrochemical performance.

In some embodiments, the silicon-oxygen-based material includes a silicate containing an alkali metal or containing an alkaline earth metal. Based on this scheme, the secondary battery exhibits further enhanced initial coulombic efficiency performance.

In some embodiments, the silicon-oxygen-based material includes a silicate containing an alkali metal, and the silicon-oxygen-based material satisfies the following condition: in an XRD diffraction pattern, a full width at half maximum of diffraction peaks corresponding to the silicate containing an alkali metal is 0.5° to 2.0°; and/or a crystallite size of the silicate corresponding to the silicate containing an alkali metal is 4 nm to 17 nm. Based on this scheme, the secondary battery exhibits further enhanced initial coulombic efficiency.

In some embodiments, the silicon-oxygen-based material includes a silicate containing an alkaline earth metal, and the silicon-oxygen-based material satisfies the following condition: in an XRD diffraction pattern, a full width at half maximum of diffraction peaks corresponding to the silicate containing an alkaline earth metal is 0.3° to 0.6°; and/or a crystallite size of the silicate corresponding to the silicate containing an alkaline earth metal is 12 nm to 20 nm. Based on this scheme, the secondary battery exhibits further enhanced initial coulombic efficiency.

In some embodiments, the volume particle size Dv50 of the silicon-oxygen-based material is 3 µm to 20 µm, optionally 5 µm to 15 µm. The particle size range described above is conducive to improving the ionic and electronic transport properties of the material, such that the fast-charging performance of the secondary battery can be further enhanced; additionally, the specific surface area of the material can be reduced, and side reactions can be reduced, thereby further enhancing the cycle performance of the secondary battery.

In some embodiments, the volume particle size Dv90 of the silicon-oxygen-based material is ≤ 60 µm, optionally 10 µm to 25 µm. When the volume distribution particle size Dv90 of the material falls within the above range, the particle uniformity is relatively good, which improves the ionic and electronic transport properties, thereby further enhancing the fast-charging performance of the secondary battery.

In some embodiments, a particle size distribution (Dv90-Dv10)/Dv50 of the silicon-oxygen-based material is 1.0 to 2, optionally 1.0 to 1.5. When the (Dv90-Dv10)/Dv50 of the material falls within the above range, the particle packing efficiency is relatively good, which enhances the compaction density of the negative electrode film layer, thereby further increasing the energy density of the secondary battery; additionally, this enables the negative electrode film layer to have an appropriate pore structure, thereby further enhancing the fast-charging performance of the secondary battery.

In some embodiments, a BET specific surface area of the silicon-oxygen-based material is 1 m²/g to 6 m²/g, optionally 1 m²/g to 5 m²/g. When the specific surface area of the material falls within the above range, side reactions are reduced, thereby enabling the secondary battery to have better cycle performance.

In some embodiments, the tap density of the silicon-oxygen-based material is 1.05 g/cm³ to 1.25 g/cm³, optionally 1.1 g/cm³ to 1.2 g/cm³. When the tap density falls within the above range, the compaction density of the negative electrode film layer can be increased, thereby further increasing the energy density of the secondary battery; additionally, this enables the negative electrode film layer to have an appropriate pore structure, which improves the ionic and electronic transport properties, and improves the wettability and the retention characteristics of the negative electrode film layer for the electrolytic solution, thereby further enhancing the fast-charging performance and/or cycle performance of the secondary battery.

In some embodiments, the silicon element content in the silicon-oxygen-based material is greater than or equal to 40 wt%, optionally 45 wt% to 65 wt%. Based on this, the silicon-oxygen material exhibits desirable electrochemical performance.

In some embodiments, the oxygen element content in the silicon-oxygen-based material is greater than or equal to 30 wt%, optionally 30 wt% to 50 wt%. Based on this, the silicon-oxygen material exhibits desirable electrochemical performance.

In some embodiments, the carbon element content in the silicon-oxygen-based material is less than or equal to 8 wt%, optionally 2 wt% to 5 wt%. Based on this, the silicon-oxygen material exhibits desirable electrochemical performance.

In some embodiments, the first active material and/or the second active material further includes a carbon-based material; optionally, the carbon-based material includes at least one of artificial graphite, natural graphite, soft carbon, and hard carbon. Based on this scheme, the secondary battery exhibits further enhanced cycle performance.

In some embodiments, the first active material includes a first carbon-based material, the second active material includes a second carbon-based material, the first carbon-based material includes primary particles, and optionally, the primary particles account for ≥ 70% by number in the first carbon-based material. Based on this scheme, the secondary battery exhibits further enhanced cycle performance.

In some embodiments, the first active material includes a first carbon-based material, the second active material includes a second carbon-based material, and the second carbon-based material includes secondary particles, and optionally, the secondary particles account for ≥ 70% by number in the second carbon-based material. The specific surface area of the primary particles is generally small, thereby reducing side reactions and improving the cycle performance of the secondary battery; additionally, the capacity of the primary particles is high, thereby increasing the energy density of the secondary battery.

Both the primary particles and the secondary particles have meanings well known in the art. A primary particle refers to a particle in a non-agglomerated state. A secondary particle refers to a particle in an agglomerated state formed by aggregation of two or more primary particles. The primary particles and the secondary particles can be distinguished by using scanning electron microscopy (SEM) images.

In some embodiments, the first active material includes a first carbon-based material, the second active material includes a second carbon-based material, and the volume average particle size Dv50 of the first carbon-based material is smaller than the volume average particle size Dv50 of the second carbon-based material. Based on this, a desirable compaction density difference between the second region and the first region of the negative electrode film layer can be achieved. As a result, the porosity of the negative electrode film layer in the thickness direction better matches the ion concentration distribution, which improves the wettability and the retention characteristics of the negative electrode film layer for the electrolytic solution and facilitates ion transport, thereby enabling the secondary battery to exhibit better cycle performance and/or fast-charging performance.

In some embodiments, the first active material includes a first carbon-based material, the second active material includes a second carbon-based material, and the tap density of the first carbon-based material is greater than that of the second carbon-based material. Based on this, the compaction density of the negative electrode film layer can be increased, thereby further increasing the energy density of the secondary battery; additionally, this enables the negative electrode film layer to have an appropriate pore structure, which improves the ionic and electronic transport properties, and improves the wettability and the retention characteristics of the negative electrode film layer for the electrolytic solution, thereby further enhancing the fast-charging performance and/or cycle performance of the secondary battery.

In some embodiments, the first active material includes a first carbon-based material, the second active material includes a second carbon-based material, and the compaction density of the first carbon-based material is greater than that of the second carbon-based material. Based on this, the second region and the first region of the negative electrode film layer are provided with a favorable pore structure, which better matches the ion concentration distribution in the thickness direction of the negative electrode film layer, improving the wettability and the retention characteristics of the negative electrode film layer for the electrolytic solution, and further facilitating ion transport, thereby enabling the secondary battery to exhibit better cycle performance and/or fast-charging performance.

In some embodiments, the volume particle size Dv50 of the first carbon-based material is 5 µm to 20 µm, optionally 8 µm to 15 µm. The particle size range described above is conducive to improving the ionic and electronic transport properties of the material, such that the fast-charging performance of the secondary battery can be further enhanced; additionally, the specific surface area of the material can be reduced, and side reactions can be reduced, thereby further enhancing the cycle performance of the secondary battery.

In some embodiments, the volume particle size Dv90 of the first carbon-based material is ≤ 50 µm, optionally 25 µm to 40 µm. When the volume distribution particle size Dv90 of the material falls within the above range, the particle uniformity is relatively good, which improves the ionic and electronic transport properties, thereby further enhancing the fast-charging performance of the secondary battery.

In some embodiments, the particle size distribution (Dv90-Dv10)/Dv50 of the first carbon-based material is 1.0 to 2.5, optionally 1.0 to 1.8. When the (Dv90-Dv10)/Dv50 of the material falls within the above range, the particle packing efficiency is relatively good, which enhances the compaction density of the negative electrode film layer, thereby further increasing the energy density of the secondary battery; additionally, this enables the negative electrode film layer to have an appropriate pore structure, thereby further enhancing the fast-charging performance of the secondary battery.

In some embodiments, the BET specific surface area of the first carbon-based material is 0.5 m²/g to 4 m²/g, optionally 1 m²/g to 3 m²/g. When the specific surface area of the material falls within the above range, side reactions are reduced, thereby enabling the secondary battery to have better cycle performance.

In some embodiments, the tap density of the first carbon-based material is 1.0 g/cm³ to 1.25 g/cm³, optionally 1.1 g/cm³ to 1.2 g/cm³. When the tap density falls within the above range, the compaction density of the negative electrode film layer can be increased, thereby further increasing the energy density of the secondary battery; additionally, this enables the negative electrode film layer to have an appropriate pore structure, which improves the ionic and electronic transport properties, and improves the wettability and the retention characteristics of the negative electrode film layer for the electrolytic solution, thereby further enhancing the fast-charging performance and/or cycle performance of the secondary battery.

In some embodiments, the powder compaction density of the first carbon-based material tested under a pressure of 30000 N is 1.6 g/cm³ to 1.9 g/cm³, optionally 1.65 g/cm³ to 1.8 g/cm³. Based on this, the secondary battery exhibits improved energy density.

In some embodiments, the volume particle size Dv50 of the second carbon-based material is 8 µm to 25 µm, optionally 12 µm to 18 µm. The particle size range described above is conducive to improving the ionic and electronic transport properties of the material, such that the fast-charging performance of the secondary battery can be further enhanced; additionally, the specific surface area of the material can be reduced, and side reactions can be reduced, thereby further enhancing the cycle performance of the secondary battery.

In some embodiments, the volume particle size Dv90 of the second carbon-based material is ≤ 60 µm, optionally 35 µm to 50 µm. When the volume distribution particle size Dv90 of the material falls within the above range, the particle uniformity is relatively good, which improves the ionic and electronic transport properties, thereby further enhancing the fast-charging performance of the secondary battery.

In some embodiments, the particle size distribution (Dv90-Dv10)/Dv50 of the second carbon-based material is 1.0 to 2.0, optionally 1.0 to 1.5. When the (Dv90-Dv10)/Dv50 of the material falls within the above range, the particle packing efficiency is relatively good, which enhances the compaction density of the negative electrode film layer, thereby further increasing the energy density of the secondary battery; additionally, this enables the negative electrode film layer to have an appropriate pore structure, thereby further enhancing the fast-charging performance of the secondary battery.

In some embodiments, the BET specific surface area of the second carbon-based material is 1 m²/g to 5 m²/g, optionally 1 m²/g to 3 m²/g. When the specific surface area of the material falls within the above range, side reactions are reduced, thereby enabling the secondary battery to have better cycle performance.

In some embodiments, the powder resistivity of the second carbon-based material under a pressure of 16 MPa is ≤ 5 × 10⁻¹ Ω·cm, optionally ≤ 2 × 10⁻¹ Ω·cm. When the powder resistivity falls within the above range, the electronic conductivity of the negative electrode film layer can be improved, thereby further enhancing the fast-charging performance of the secondary battery.

In some embodiments, the tap density of the second carbon-based material is 0.9 g/cm³ to 1.2 g/cm³, optionally 1.0 g/cm³ to 1.1 g/cm³. When the tap density falls within the above range, the compaction density of the negative electrode film layer can be increased, thereby further increasing the energy density of the secondary battery; additionally, this enables the negative electrode film layer to have an appropriate pore structure, which improves the ionic and electronic transport properties, and improves the wettability and the retention characteristics of the negative electrode film layer for the electrolytic solution, thereby further enhancing the fast-charging performance and/or cycle performance of the secondary battery.

The powder compaction density of the second carbon-based material tested under a pressure of 30000 N is 1.5 g/cm³ to 1.75 g/cm³, optionally 1.55 g/cm³ to 1.7 g/cm³. Based on this, the secondary battery exhibits improved energy density.

In a second aspect, the present application provides an electric device, including the secondary battery according to any one of the above aspects.

### Beneficial effects:

One or more embodiments of the present application have one or more of the following effects:
(1) the secondary battery exhibits improved fast-charging performance; and
(2) the secondary battery exhibits improved cycle performance.

### BRIEF DESCRIPTION OF THE DRAWINGS

FIG. 1 (A)-(C) are schematic cross-sectional views of negative electrode plates according to some embodiments of the present application, respectively.
FIG. 2 is a schematic diagram of a secondary battery and an exploded view of the secondary battery according to one embodiment of the present application.
FIG. 3 is a schematic diagram of a battery module according to one embodiment of the present application.
FIG. 4 is a schematic diagram of a battery pack according to one embodiment of the present application.
FIG. 5 is an exploded view of the battery pack according to one embodiment of the present application shown in FIG. 4.
FIG. 6 is a schematic diagram of an electric device using a secondary battery as a power source according to one embodiment of the present application.

### Description of the reference numerals:

1, battery pack; 2, upper case body; 3, lower case body; 4, battery module; 5, secondary battery; 51, housing; 52, electrode assembly; 53, top cover assembly; 101, negative electrode current collector; 102, negative electrode film layer; 102a, first surface; 102b, second surface; 1021, first region; 1022, second region; 1023, intermediate region.

### DETAILED DESCRIPTION

Hereinafter, embodiments specifically disclosing the negative electrode plate and the preparation method therefor, the positive electrode plate, the negative electrode plate, the secondary battery, the battery module, the battery pack, and the device of the present application are described in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

### [Secondary Battery]

Secondary batteries, also known as rechargeable batteries or storage batteries, refer to batteries that can continue to be used by reactivating their active materials through charging after discharging.

Typically, a secondary battery includes a positive electrode plate, a negative electrode plate, a separator, and an electrolytic solution. During the charging and discharging process of the battery, active ions (such as lithium ions) are intercalated and deintercalated back and forth between the positive electrode plate and the negative electrode plate. The separator is disposed between the positive electrode plate and the negative electrode plate to primarily prevent the positive and negative electrodes from short-circuiting, while allowing the passage of active ions. The electrolytic solution is between the positive electrode plate and the negative electrode plate, and primarily functions to conduct active ions.

The secondary battery is, for example, a lithium-ion battery. The lithium-ion battery primarily consists of a positive electrode, a negative electrode, a separator, and an electrolytic solution. The separator is disposed between the positive and negative electrodes to prevent short-circuiting, and the electrolytic solution infiltrates the positive and negative electrodes to ensure ionic conduction. During charging, Li+ is deintercalated from the positive electrode, and migrates through the electrolytic solution and penetrates the separator to be intercalated into the negative electrode, thereby rendering the positive electrode in a high-potential lithium-depleted state and the negative electrode in a low-potential lithium-enriched state. During discharging, the reverse process occurs: Li+ is deintercalated from the negative electrode, and migrates through the electrolytic solution and penetrates the separator to be intercalated into the positive electrode material, thereby restoring the positive electrode to a lithium-enriched state. To maintain charge balance, the same number of electrons migrate through an external circuit during charging and discharging processes, accompanying the Li+ migration between the positive and negative electrodes, thereby causing oxidation and reduction reactions at the positive and negative electrodes, respectively. The lithium ions are capable of reversibly migrating between the positive and negative electrodes through the electrolytic solution, and both the positive and negative electrodes are composed of insertion-type materials that allow reversible intercalation and deintercalation of lithium ions.

The secondary battery is, for example, a sodium-ion battery. The sodium-ion battery primarily consists of a positive electrode, a negative electrode, a separator, and an electrolytic solution. The separator is disposed between the positive and negative electrodes to prevent short-circuiting, and the electrolytic solution infiltrates the positive and negative electrodes to ensure ionic conduction. During charging, Na+ is deintercalated from the positive electrode, and migrates through the electrolytic solution and penetrates the separator to be intercalated into the negative electrode, thereby rendering the positive electrode in a high-potential sodium-depleted state and the negative electrode in a low-potential sodium-enriched state. During discharging, the reverse process occurs: Na+ is deintercalated from the negative electrode, and migrates through the electrolytic solution and penetrates the separator to be intercalated into the positive electrode material, thereby restoring the positive electrode to a sodium-enriched state. To maintain charge balance, the same number of electrons migrate through an external circuit during charging and discharging processes, accompanying the Na+ migration between the positive and negative electrodes, thereby causing oxidation and reduction reactions at the positive and negative electrodes, respectively. The sodium ions are capable of reversibly migrating between the positive and negative electrodes through the electrolytic solution, and both the positive and negative electrodes are composed of insertion-type materials that allow reversible intercalation and deintercalation of sodium ions.

The present application provides a novel secondary battery having a novel negative electrode plate, and the secondary battery exhibits improved energy density and cycle performance.

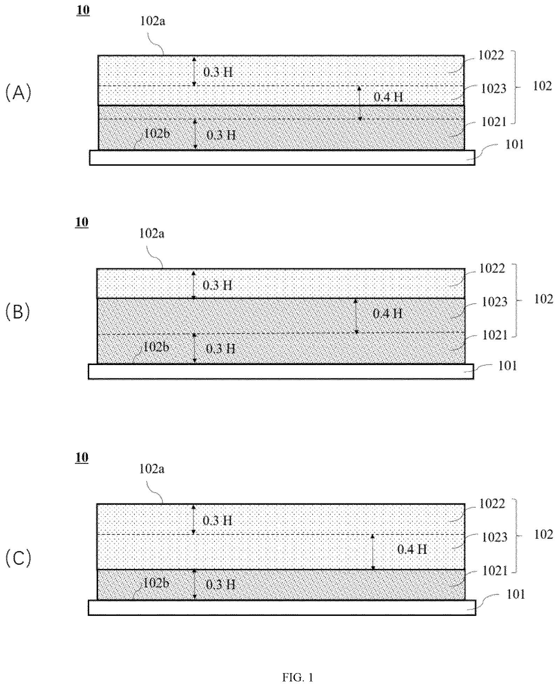

FIG. 1 (A) to (C) are schematic diagrams of embodiments of the negative electrode plate of the secondary battery of the present application.

As shown in the figure, the present application provides a secondary battery, including a negative electrode plate 10, where the negative electrode plate 10 includes a negative electrode current collector 101 and a negative electrode film layer 102, the negative electrode film layer 102 has a first surface 102b proximal to the negative electrode current collector and a second surface 102a arranged opposite to the first surface, the thickness of the negative electrode film layer 102 is denoted as H, a region extending from the first surface 102b of the negative electrode film layer to a thickness range of 0.3 H is defined as a first region 1021 of the negative electrode film layer, a region extending from the second surface 102a of the negative electrode film layer to a thickness range of 0.3 H is defined as a second region 1022 of the negative electrode film layer,
the first region 1021 includes a first active material, the second region 1022 includes a second active material,
the first active material includes a silicon-oxygen-based material, and the second active material includes a silicon-carbon composite material.

Compared to the silicon-carbon composite material, the silicon-oxygen-based material exhibits higher energy density. Compared to the silicon-oxygen-based material, the silicon-carbon composite material exhibits better cycle performance and fast-charging performance. When the first region of the negative electrode film layer contains the silicon-oxygen-based material and the second region contains the silicon-carbon composite material, the respective advantages of the two materials can be fully utilized, and the respective deficiencies of the two materials can be mutually compensated, such that the cycle performance and the fast-charging performance of the secondary battery can be significantly enhanced. Without being limited by theory, the silicon-oxygen-based material in the first region enhances the compaction density of the electrode plate and the fast-charging capability of the battery, and the silicon-carbon composite material in the second region can be fully contacted with the electrolytic solution, thereby maintaining good structural stability during long-term cycling and improving the cycle performance of the battery.

Compared to secondary batteries only containing pure silicon-oxygen-based materials, the secondary battery of the present application exhibits better cycle performance. Compared to secondary batteries only containing silicon-carbon composite materials, the secondary battery of the present application exhibits higher energy density. It should be emphasized that the positional arrangement of the silicon-oxygen-based material and the silicon-carbon composite material is critical. When the first region of the negative electrode film layer contains the silicon-oxygen-based material and the second region contains the silicon-carbon composite material, the silicon-oxygen-based material and the silicon-carbon composite material exhibit a synergistic effect by leveraging their respective advantages while compensating for their respective deficiencies. If the positional arrangement of the silicon-oxygen-based material and the silicon-carbon composite material is inverted, the above synergistic effect cannot be achieved.

In some embodiments, the mass percentage of the silicon-oxygen-based material in the first active material is denoted as A1, and the mass percentage of the silicon-carbon composite material in the second active material is denoted as A2, where A2/A1 ≤ 2, and optionally, 0.2 ≤ A2/A1 ≤ 0.8. Within the above range, the silicon-oxygen-based material and the silicon-carbon composite material exhibit a further enhanced synergistic effect. Based on this scheme, the secondary battery exhibits further enhanced cycle performance and/or fast-charging performance.

In some embodiments, the value of A2/A1 may be 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1.0, 1.1, 1.2, 1.3, 1.4, 1.5, 1.6, 1.7, 1.8, 1.9, 2.0, or a range defined by any two of the foregoing values. For example, the range may be 0.1-2.0, 0.1-1.8, 0.1-1.6, 0.1-1.4, 0.1-1.2, 0.1-1.0, 0.1-0.8, 0.1-0.6, 0.2-2.0, 0.2-1.8, 0.2-1.6, 0.2-1.4, 0.2-1.2, 0.2-1.0, 0.2-0.8, 0.2-0.6, 0.3-2.0, 0.3-1.8, 0.3-1.6, 0.3-1.4, 0.3-1.2, 0.3-1.0, 0.3-0.8, 0.3-0.6, 0.4-2.0, 0.4-1.8, 0.4-1.6, 0.4-1.4, 0.4-1.2, 0.4-1.0, 0.4-0.8, 0.4-0.6, 0.5-2.0, 0.5-1.8, 0.5-1.6, 0.5-1.4, 0.5-1.2, 0.5-1.0, 0.5-0.8, 0.6-2.0, 0.6-1.8, 0.6-1.6, 0.6-1.4, 0.6-1.2, 0.6-1.0, 0.8-2.0, 0.8-1.8, 0.8-1.6, 0.8-1.4, 0.8-1.2, 1.0-2.0, 1.0-1.8, 1.0-1.6, 1.0-1.4, 1.1-2.0, 1.1-1.8, 1.1-1.6, or 1.1-1.4.

In some embodiments, the mass percentage of the silicon-oxygen-based material in the first active material is less than or equal to 30 wt%, optionally 10 wt%-25 wt%.

In some embodiments, the mass percentage of the silicon-carbon composite material in the second active material is less than or equal to 25 wt%, optionally 5 wt%-20 wt%. Within the above range, the silicon-oxygen-based material and the silicon-carbon composite material exhibit a further enhanced synergistic effect.

Within the above range, the silicon-oxygen-based material and the silicon-carbon composite material exhibit a further enhanced synergistic effect. Based on this scheme, the secondary battery exhibits further enhanced cycle performance and/or fast-charging performance.

In some embodiments, the value of A1 may be 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%, 24 wt%, 25 wt%, 26 wt%, 27 wt%, 28 wt%, 29 wt%, 30 wt%, or a range defined by any two of the foregoing values. For example, the range may be 1 wt%-30 wt%, 5 wt%-30 wt%, 10 wt%-30 wt%, 15 wt%-30 wt%, 20 wt%-30 wt%, 25 wt%-30 wt%, 1 wt%-25 wt%, 5 wt%-25 wt%, 10 wt%-25 wt%, 15 wt%-25 wt%, 20 wt%-25 wt%, 1 wt%-20 wt%, 5 wt%-20 wt%, 10 wt%-20 wt%, 15 wt%-20 wt%, 1 wt%-10 wt%, or 5 wt%-10 wt%.

In some embodiments, the value of A2 may be 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%, 24 wt%, 25 wt%, or a range defined by any two of the foregoing values. For example, the range may be 1 wt%-25 wt%, 5 wt%-25 wt%, 10 wt%-25 wt%, 15 wt%-25 wt%, 20 wt%-25 wt%, 1 wt%-20 wt%, 5 wt%-20 wt%, 10 wt%-20 wt%, 15 wt%-20 wt%, 1 wt%-10 wt%, or 5 wt%-10 wt%.

In some embodiments, the structure of the negative electrode plate can be analyzed by sampling the negative electrode plate using methods known in the art. As an example, the negative electrode plate sampling method includes: washing the negative electrode plate with dimethyl carbonate (DMC), followed by drying; washing the negative electrode plate with deionized water, followed by drying; subjecting a cross-section of the negative electrode plate to ion milling, followed by observing the cross-section via scanning electron microscopy to identify a boundary between the first negative electrode film and the second negative electrode film, measuring the thickness (H) of the first negative electrode film and the second negative electrode film, and recording the measurements; as shown in FIG. 1, scraping a powder from the second region 1022 of the negative electrode plate 10 on a side distal to the current collector 101, while monitoring thickness variation with a micrometer to control the scraping depth at 0.3 H, thereby ensuring that the scraped powder is entirely derived from the second region 1022; and completely detaching the negative electrode film from the current collector using an adhesive tape, scraping a powder from the first region 1021 of the negative electrode film on a side proximal to the current collector, while monitoring thickness variation with a micrometer to control the scraping depth at 0.3 H, thereby ensuring that the scraped powder is entirely derived from the first region 1021.

In some embodiments, the mass percentage A1 of the silicon-oxygen-based material in the first active material can be determined using methods known in the art. As an example, the value of A1 is determined by the following test method: sintering the first active substance in air at 800 °C for 4 h to obtain a silicon dioxide material, and calculating the silicon-oxygen content of the material by back-calculating the molar mass of silicon in the material.

In some embodiments, the mass percentage of the silicon-carbon composite material in the second active material is measured using methods known in the art and denoted as A2. As an example, the value of A2 is determined by the following test method: subjecting an electrode plate containing the second region active material to cross-sectional polishing (CP) testing, selecting silicon-carbon particles within a 3 × 3 µm region, and measuring the percentage of silicon and carbon content; sintering the second active material in air at 800 °C for 4 h to obtain a silicon dioxide material; and calculating the silicon-carbon content of the material by back-calculating the molar mass of silicon in the material.

In some embodiments, the volume average particle size Dv50 of the silicon-carbon composite material is greater than the volume average particle size Dv50 of the silicon-oxygen-based material. By configuring the silicon-carbon composite material to have a volume average particle size Dv50 greater than the volume average particle size Dv50 of the silicon-oxygen-based material, a desirable compaction density difference between the second region and the first region of the negative electrode film layer can be achieved. As a result, the porosity of the negative electrode film layer in the thickness direction better matches the ion concentration distribution, which improves the wettability and the retention characteristics of the negative electrode film layer for the electrolytic solution and facilitates ion transport, thereby enabling the secondary battery to exhibit better cycle performance and/or fast-charging performance.

In some embodiments, the Dv10, Dv50, and Dv90 of the negative electrode active material have meanings well known in the art and can be measured using methods known in the art. For example, the measurement may be performed with reference to standard GB/T 19077-2016 using a laser particle size analyzer (e.g., Malvern Master Size 3000).

The physical definitions of Dv10, Dv50, and Dv90 are as follows: particle sizes at which the cumulative volume distribution percentages of the negative electrode active material reach 10%, 50%, and 90%, respectively.

In some embodiments, the powder compaction density of the silicon-carbon composite material tested under a pressure of 3 × 10⁴ N is less than that of the silicon-oxygen-based material tested under a pressure of 3 × 10⁴ N. By configuring the silicon-carbon composite material to have a compaction density greater than that of the silicon-oxygen-based material, the second region and the first region of the negative electrode film layer are provided with a favorable pore structure, which better matches the ion concentration distribution in the thickness direction of the negative electrode film layer, improving the wettability and the retention characteristics of the negative electrode film layer for the electrolytic solution, and further facilitating ion transport, thereby enabling the secondary battery to exhibit better cycle performance and/or fast-charging performance.

In some embodiments, the powder compaction density of the material has a meaning well known in the art and can be measured using instruments and methods known in the art. For example, the measurement may be performed with reference to GB/T 24533-2009 using an electronic compression tester (e.g., UTM7305 electronic compression tester). An exemplary measurement method is as follows: weighing out 1 g of sample powder, placing the sample powder into a mold with a base area of 1.327 cm², applying pressure to a required value, maintaining the pressure for 30 s, then releasing the pressure and holding for 10 s, and subsequently recording and calculating the powder compaction density of the material under the required pressure.

In some embodiments, the tap density of the silicon-carbon composite material is less than that of the silicon-oxygen-based material. By configuring the silicon-carbon composite material to have a tap density less than that of the silicon-oxygen-based material, the pore structure of the negative electrode film layer in the thickness direction can be optimized, improving the wettability and the retention characteristics of the negative electrode film layer for the electrolytic solution, and further facilitating ion transport, thereby enabling the secondary battery to exhibit better cycle performance and/or fast-charging performance.

In some embodiments, the tap density of the material has a meaning well known in the art and can be measured using instruments and methods known in the art. For example, the measurement can be performed with reference to GB/T 5162-2006 using a powder tap density analyzer. The testing instrument may be a Bettersize BT-301, with the following parameters: vibration frequency of 250 ± 15 times/minute, amplitude of 3 ± 0.2 mm, total vibrations of 5000 times, and graduated cylinder volume of 25 mL.

In some embodiments, the specific surface area of the silicon-carbon composite material is greater than that of the silicon-oxygen-based material. By configuring the silicon-carbon composite material to have a specific surface area greater than that of the silicon-oxygen-based material, ions can rapidly migrate to the first region of the negative electrode plate, and side reactions are reduced, thereby enabling the secondary battery to exhibit better cycle performance and/or fast-charging performance.

In some embodiments, the specific surface area of the material has a meaning well known in the art and can be measured using methods known in the art. For example, the specific surface area can be determined by the analysis and measurement method of specific surface area by nitrogen adsorption with reference to GB/T 19587-2017 and calculated by the Brunauer Emmett Teller (BET) method. The analysis and measurement method of specific surface area by nitrogen adsorption can be performed using a Tri-Star model 3020 specific surface area and pore size analyzer from Micromeritics, USA.

In some embodiments, a powder resistivity of the silicon-carbon composite material tested under a pressure of 16 MPa is greater than that of the silicon-oxygen-based material tested under a pressure of 16 MPa. By configuring the silicon-carbon composite material to have a powder resistivity greater than that of the silicon-oxygen-based material, the electronic conductivity of the negative electrode film layer can be improved, thereby further enhancing the fast-charging performance of the secondary battery.

In some embodiments, the powder resistivity of the material has a meaning well known in the art and can be measured using instruments and methods known in the art. For example, the measurement may be performed using a resistivity tester (e.g., ST2722 powder resistivity tester from Suzhou Jingge Electronics Co., Ltd. ). Specifically, 1 g of powder sample is placed between the tester's electrodes and compressed under constant pressure via an electronic press to the designated test pressure (e.g., 4 MPa). The pressure is maintained for 15-25 s to obtain a pelletized sample. The powder resistivity δ (expressed in Ω·cm) is calculated according to the formula: δ = (S × R)/h, where h represents the pellet height (unit: cm), R represents the resistance (unit: Ω), and S represents the pellet area (unit: cm²).

In some embodiments, the silicon-carbon composite material includes a carbon matrix and a silicon-based material disposed in the carbon matrix. Based on this scheme, the secondary battery exhibits further enhanced cycle performance.

In some embodiments, the initial coulombic efficiency of the silicon-carbon composite material is ≥ 90 wt%, optionally 91 wt%-94 wt%. Based on this scheme, the secondary battery exhibits further enhanced initial coulombic efficiency.

In some embodiments, the volume particle size Dv50 of the silicon-carbon composite material is 3 µm-15 µm, optionally 5 µm-12 µm. The particle size range described above is conducive to improving the ionic and electronic transport properties of the material, such that the fast-charging performance of the secondary battery can be further enhanced; additionally, the specific surface area of the material can be reduced, and side reactions can be reduced, thereby further enhancing the cycle performance of the secondary battery.

In some embodiments, the volume particle size Dv90 of the silicon-carbon composite material is ≤ 60 µm, optionally 20 µm-40 µm. When the volume distribution particle size Dv90 of the material falls within the above range, the particle uniformity is relatively good, which improves the ionic and electronic transport properties, thereby further enhancing the fast-charging performance of the secondary battery.

In some embodiments, the particle size distribution (Dv90-Dv10)/Dv50 of the silicon-carbon composite material is 1.0-3.0, optionally 1.0-2.0. When the (Dv90-Dv10)/Dv50 of the material falls within the above range, the particle packing efficiency is relatively good, which enhances the compaction density of the negative electrode film layer, thereby further increasing the energy density of the secondary battery; additionally, this enables the negative electrode film layer to have an appropriate pore structure, thereby further enhancing the fast-charging performance of the secondary battery.

In some embodiments, the BET specific surface area of the silicon-carbon composite material is less than or equal to 20 m²/g, optionally 1 m²/g-10 m²/g. When the specific surface area of the material falls within the above range, side reactions are reduced, thereby enabling the secondary battery to have better cycle performance.

In some embodiments, the powder resistivity of the silicon-carbon composite material under a pressure of 16 MPa is ≤ 300 Ω·cm, optionally ≤ 50 Ω·cm. Based on this scheme, the electronic conductivity of the negative electrode film layer can be improved, thereby further enhancing the fast-charging performance of the secondary battery.

In some embodiments, the tap density of the silicon-carbon composite material is 0.8 g/cm³-1.0 g/cm³, optionally 0.9 g/cm³-1.0 g/cm³. When the tap density falls within the above range, the compaction density of the negative electrode film layer can be increased, thereby further increasing the energy density of the secondary battery; additionally, this enables the negative electrode film layer to have an appropriate pore structure, which improves the ionic and electronic transport properties, and improves the wettability and the retention characteristics of the negative electrode film layer for the electrolytic solution, thereby further enhancing the fast-charging performance and/or cycle performance of the secondary battery.

In some embodiments, the silicon element content in the silicon-carbon composite material is greater than or equal to 30 wt%, optionally 40 wt%-60 wt%. Based on this, the silicon-carbon composite material exhibits desirable electrochemical performance.

In some embodiments, the carbon element content in the silicon-carbon composite material is greater than or equal to 40 wt%, optionally 45 wt%-60 wt%. Based on this, the silicon-carbon composite material exhibits desirable electrochemical performance.

In some embodiments, the oxygen element content in the silicon-carbon composite material is less than or equal to 10 wt%, optionally 1 wt%-5 wt%. Based on this, the silicon-carbon composite material exhibits desirable electrochemical performance.

In some embodiments, the silicon-oxygen-based material includes a silicate containing an alkali metal or containing an alkaline earth metal. Based on this scheme, the secondary battery exhibits further enhanced initial coulombic efficiency performance.

In some embodiments, the silicon-oxygen-based material includes a silicate containing an alkali metal, and the silicon-oxygen-based material satisfies the following condition: in an XRD diffraction pattern, the full width at half maximum of diffraction peaks corresponding to the silicate containing an alkali metal is 0.5°-2.0°; and/or the crystallite size of the silicate corresponding to the silicate containing an alkali metal is 4 nm-17 nm. Based on this scheme, the secondary battery exhibits further enhanced initial coulombic efficiency.

In some embodiments, the silicate containing an alkali metal includes M₂Si₂O₅, M₂SiO₃, or a combination thereof, where M includes one or more alkali metal elements. The alkali metal element is, for example, selected from one or more of Li, Na, and K.

In some embodiments, the silicon-oxygen-based material includes a silicate containing an alkaline earth metal, and the silicon-oxygen-based material satisfies the following condition: in an XRD diffraction pattern, the full width at half maximum of diffraction peaks corresponding to the silicate containing an alkaline earth metal is 0.3°-0.6°; and/or the crystallite size of the silicate corresponding to the silicate containing an alkaline earth metal is 12 nm-20 nm. Based on this scheme, the secondary battery exhibits further enhanced initial coulombic efficiency.

In some embodiments, the silicate containing an alkaline earth metal includes QSiO₃ or a combination thereof, where Q includes one or more alkaline earth metal elements. The alkali metal element is, for example, selected from one or more of Mg, Ca, Be, and Sr.

In some embodiments, the volume particle size Dv50 of the silicon-oxygen-based material is 3 µm-20 µm, optionally 5 µm-15 µm. The particle size range described above is conducive to improving the ionic and electronic transport properties of the material, such that the fast-charging performance of the secondary battery can be further enhanced; additionally, the specific surface area of the material can be reduced, and side reactions can be reduced, thereby further enhancing the cycle performance of the secondary battery.

In some embodiments, the volume particle size Dv90 of the silicon-oxygen-based material is ≤ 60 µm, optionally 10 µm-25 µm. When the volume distribution particle size Dv90 of the material falls within the above range, the particle uniformity is relatively good, which improves the ionic and electronic transport properties, thereby further enhancing the fast-charging performance of the secondary battery.

In some embodiments, a particle size distribution (Dv90-Dv10)/Dv50 of the silicon-oxygen-based material is 1.0-2, optionally 1.0-1.5. When the (Dv90-Dv10)/Dv50 of the material falls within the above range, the particle packing efficiency is relatively good, which enhances the compaction density of the negative electrode film layer, thereby further increasing the energy density of the secondary battery; additionally, this enables the negative electrode film layer to have an appropriate pore structure, thereby further enhancing the fast-charging performance of the secondary battery.

In some embodiments, the BET specific surface area of the silicon-oxygen-based material is 1 m²/g-6 m²/g, optionally 1 m²/g-5 m²/g. When the specific surface area of the material falls within the above range, side reactions are reduced, thereby enabling the secondary battery to have better cycle performance.

In some embodiments, the tap density of the silicon-oxygen-based material is 1.05 g/cm³-1.25 g/cm³, optionally 1.1 g/cm³-1.2 g/cm³. When the tap density falls within the above range, the compaction density of the negative electrode film layer can be increased, thereby further increasing the energy density of the secondary battery; additionally, this enables the negative electrode film layer to have an appropriate pore structure, which improves the ionic and electronic transport properties, and improves the wettability and the retention characteristics of the negative electrode film layer for the electrolytic solution, thereby further enhancing the fast-charging performance and/or cycle performance of the secondary battery.

In some embodiments, the silicon element content in the silicon-oxygen-based material is greater than or equal to 40 wt%, optionally 45 wt%-65 wt%. Based on this, the silicon-oxygen-based material exhibits improved electrochemical performance.

In some embodiments, the oxygen element content in the silicon-oxygen-based material is greater than or equal to 30 wt%, optionally 30 wt%-50 wt%. Based on this, the silicon-oxygen-based material exhibits improved electrochemical performance.

In some embodiments, the carbon element content in the silicon-oxygen-based material is less than or equal to 8 wt%, optionally 2 wt%-5 wt%. Based on this, the silicon-oxygen-based material exhibits improved electrochemical performance.

In some embodiments, the first active material and/or the second active material further includes a carbon-based material; optionally, the carbon-based material includes at least one of artificial graphite, natural graphite, soft carbon, and hard carbon. Based on this scheme, the secondary battery exhibits further enhanced cycle performance.

In some embodiments, the first active material includes a first carbon-based material, the second active material includes a second carbon-based material, the first carbon-based material includes primary particles, and optionally, the primary particles account for ≥ 70% by number in the first carbon-based material. The specific surface area of the primary particles is generally small, thereby reducing side reactions and improving the cycle performance of the secondary battery; additionally, the capacity of the primary particles is high, thereby increasing the energy density of the secondary battery.

In some embodiments, the first active material includes a first carbon-based material, the second active material includes a second carbon-based material, and the second carbon-based material includes secondary particles, and optionally, the secondary particles account for ≥ 70% by number in the second carbon-based material. Based on this scheme, the secondary battery exhibits further enhanced cycle performance.

Both the primary particles and the secondary particles have meanings well known in the art. A primary particle refers to a particle in a non-agglomerated state. A secondary particle refers to a particle in an agglomerated state formed by aggregation of two or more primary particles. The primary particles and the secondary particles can be distinguished by using scanning electron microscopy (SEM) images.

As an example, the test method for determining the quantity proportion of the first carbon-based material in the form of primary particles in the first carbon-based material may be as follows: the obtained first active material is spread and adhered onto a conductive adhesive to prepare a test sample with dimensions of 6 cm × 1.1 cm; the particle morphology is tested using a scanning electron microscope (SEM), and reference may be made to JY/T010-1996. To ensure the accuracy of the test results, multiple (e.g., 10) different regions of the test sample may be randomly selected for scanning, and the proportion of the first carbon-based material in the form of primary particles relative to the total first carbon-based material in each region is calculated at a certain magnification (e.g., 500× or 1000×). The mean value of the calculations from the multiple test regions is used as the test result. To ensure the accuracy of the test results, multiple test samples (e.g., 5 or 10) may be prepared, and the above testing process is repeated. The mean value of the results from the multiple test samples is used as the final test result. Similarly, the quantity proportion of the first silicon-based material in the form of secondary particles in the first silicon-based material may also be measured.

As an example, the test method for determining the quantity proportion of the second carbon-based material in the form of secondary particles within the second carbon-based material may be as follows: the obtained second active material is spread and adhered onto a conductive adhesive to prepare a test sample with dimensions of 6 cm × 1.1 cm; the particle morphology is tested using a scanning electron microscope (SEM), and reference may be made to JY/T010-1996. To ensure the accuracy of the test results, multiple (e.g., 10) different regions of the test sample may be randomly selected for scanning, and the proportion of the second carbon-based material in the form of secondary particles relative to the total second carbon-based material in each region is calculated at a certain magnification (e.g., 500× or 1000×). The mean value of the calculations from the multiple test regions is used as the test result. To ensure the accuracy of the test results, multiple test samples (e.g., 5 or 10) may be prepared, and the above testing process is repeated. The mean value of the results from the multiple test samples is used as the final test result. Similarly, the quantity proportion of the second silicon-based material in the form of primary particles in the second silicon-based material may also be measured.

The quantity proportion of the primary particles (referring to non-agglomerated particles herein) and the secondary particles in the above carbon-based material (e.g., the first carbon-based material or the second carbon-based material) can be adjusted by methods known in the art. For example, when the carbon-based material is graphite, the quantity proportion of the primary particles and the secondary particles can be adjusted by modifying the preparation parameters (e.g., the type of coke precursor, shaping process, granulation process, and the type and amount of granulating agent). The quantity proportion of the primary particles and the secondary particles can also be adjusted by regulating the mixing ratio of graphite primary particles to graphite secondary particles.

In some embodiments, the first active material includes a first carbon-based material, the second active material includes a second carbon-based material, and the volume average particle size Dv50 of the first carbon-based material is smaller than the volume average particle size Dv50 of the second carbon-based material. Based on this, a desirable compaction density difference between the second region and the first region of the negative electrode film layer can be achieved. As a result, the porosity of the negative electrode film layer in the thickness direction better matches the ion concentration distribution, which improves the wettability and the retention characteristics of the negative electrode film layer for the electrolytic solution and facilitates ion transport, thereby enabling the secondary battery to exhibit better cycle performance and/or fast-charging performance.

In some embodiments, the first active material includes a first carbon-based material, the second active material includes a second carbon-based material, and the tap density of the first carbon-based material is greater than that of the second carbon-based material. When the tap density falls within the above range, the compaction density of the negative electrode film layer can be increased, thereby further increasing the energy density of the secondary battery; additionally, this enables the negative electrode film layer to have an appropriate pore structure, which improves the ionic and electronic transport properties, and improves the wettability and the retention characteristics of the negative electrode film layer for the electrolytic solution, thereby further enhancing the fast-charging performance and/or cycle performance of the secondary battery.

In some embodiments, the first active material includes a first carbon-based material, the second active material includes a second carbon-based material, and the compaction density of the first carbon-based material is greater than that of the second carbon-based material. Based on this, the second region and the first region of the negative electrode film layer are provided with a favorable pore structure, which better matches the ion concentration distribution in the thickness direction of the negative electrode film layer, improving the wettability and the retention characteristics of the negative electrode film layer for the electrolytic solution, and further facilitating ion transport, thereby enabling the secondary battery to exhibit better cycle performance and/or fast-charging performance.

In some embodiments, the volume particle size Dv50 of the first carbon-based material is 5 µm-20 µm, optionally 8 µm-15 µm. The particle size range described above is conducive to improving the ionic and electronic transport properties of the material, such that the fast-charging performance of the secondary battery can be further enhanced; additionally, the specific surface area of the material can be reduced, and side reactions can be reduced, thereby further enhancing the cycle performance of the secondary battery.

In some embodiments, the volume particle size Dv90 of the first carbon-based material is ≤ 50 µm, optionally 25 µm-40 µm. When the volume distribution particle size Dv90 of the material falls within the above range, the particle uniformity is relatively good, which improves the ionic and electronic transport properties, thereby further enhancing the fast-charging performance of the secondary battery.

In some embodiments, the particle size distribution (Dv90-Dv10)/Dv50 of the first carbon-based material is 1.0-2.5, optionally 1.0-1.8. When the (Dv90-Dv10)/Dv50 of the material falls within the above range, the particle packing efficiency is relatively good, which enhances the compaction density of the negative electrode film layer, thereby further increasing the energy density of the secondary battery; additionally, this enables the negative electrode film layer to have an appropriate pore structure, thereby further enhancing the fast-charging performance of the secondary battery.

In some embodiments, the BET specific surface area of the first carbon-based material is 0.5 m²/g-4 m²/g, optionally 1 m²/g-3 m²/g. When the specific surface area of the material falls within the above range, side reactions are reduced, thereby enabling the secondary battery to have better cycle performance.

In some embodiments, the tap density of the first carbon-based material is 1.0 g/cm³-1.25 g/cm³, optionally 1.1 g/cm³-1.2 g/cm³. When the tap density falls within the above range, the compaction density of the negative electrode film layer can be increased, thereby further increasing the energy density of the secondary battery; additionally, this enables the negative electrode film layer to have an appropriate pore structure, which improves the ionic and electronic transport properties, and improves the wettability and the retention characteristics of the negative electrode film layer for the electrolytic solution, thereby further enhancing the fast-charging performance and/or cycle performance of the secondary battery.

In some embodiments, the powder compaction density of the first carbon-based material tested under a pressure of 30000 N is 1.6 g/cm³-1.9 g/cm³, optionally 1.65 g/cm³-1.8 g/cm³. Based on this, the secondary battery exhibits improved energy density.

In some embodiments, the volume particle size Dv50 of the second carbon-based material is 8 µm-25 µm, optionally 12 µm-18 µm. The particle size range described above is conducive to improving the ionic and electronic transport properties of the material, such that the fast-charging performance of the secondary battery can be further enhanced; additionally, the specific surface area of the material can be reduced, and side reactions can be reduced, thereby further enhancing the cycle performance of the secondary battery.

In some embodiments, the volume particle size Dv90 of the second carbon-based material is ≤ 60 µm, optionally 35 µm to 50 µm. When the volume distribution particle size Dv90 of the material falls within the above range, the particle uniformity is relatively good, which improves the ionic and electronic transport properties, thereby further enhancing the fast-charging performance of the secondary battery.

In some embodiments, the particle size distribution (Dv90-Dv10)/Dv50 of the second carbon-based material is 1.0-2.0, optionally 1.0-1.5. When the (Dv90-Dv10)/Dv50 of the material falls within the above range, the particle packing efficiency is relatively good, which enhances the compaction density of the negative electrode film layer, thereby further increasing the energy density of the secondary battery; additionally, this enables the negative electrode film layer to have an appropriate pore structure, thereby further enhancing the fast-charging performance of the secondary battery.

In some embodiments, the BET specific surface area of the second carbon-based material is 1 m²/g-5 m²/g, optionally 1 m²/g-3 m²/g. When the specific surface area of the material falls within the above range, side reactions are reduced, thereby enabling the secondary battery to have better cycle performance.

In some embodiments, the tap density of the second carbon-based material is 0.9 g/cm³-1.2 g/cm³, optionally 1.0 g/cm³-1.1 g/cm³. When the tap density falls within the above range, the compaction density of the negative electrode film layer can be increased, thereby further increasing the energy density of the secondary battery; additionally, this enables the negative electrode film layer to have an appropriate pore structure, which improves the ionic and electronic transport properties, and improves the wettability and the retention characteristics of the negative electrode film layer for the electrolytic solution, thereby further enhancing the fast-charging performance and/or cycle performance of the secondary battery.

In some embodiments, the powder compaction density of the second carbon-based material tested under a pressure of 30000 N is 1.5 g/cm³-1.75 g/cm³, optionally 1.55 g/cm³-1.7 g/cm³. Based on this, the secondary battery exhibits improved energy density.

As shown in FIG. 1 (A) to (C), the negative electrode film layer 102 further includes an intermediate region 1023, with a thickness of 0.4 H (H represents the thickness of the negative electrode film layer 102), located between the first region 1021 of the negative electrode film layer and the second region 1022 of the negative electrode film layer.

In some embodiments, the intermediate region 1023 located between the first region 1021 and the second region 1022 includes the silicon-carbon composite material and/or the silicon-oxygen-based material. For example, as shown in FIG. 1 (B), the intermediate region 1023 may have the same composition as the first region 1021, such that the distribution region of the first active material in the thickness direction of the negative electrode film layer 102 extends from the second surface 102b of the negative electrode film layer to a thickness range of 0.7 H. Alternatively, as shown in FIG. 1 (C), the intermediate region 1023 may have the same composition as the second region 1022, such that the distribution region of the second active material in the thickness direction of the negative electrode film layer 102 extends from the first surface 102a of the negative electrode film layer to a thickness range of 0.7 H. Alternatively, as shown in FIG. 1 (A), the intermediate region 1023 may include both the first active material and the second active material. In this case, the intermediate region 1023 includes both a layer structure comprising the first active material and a layer structure comprising the second active material, and the two layer structures may further have a layer interface.

In some embodiments, the second region 1022 of the negative electrode film layer may further include other negative electrode active materials known in the art in addition to the second carbon-based material and the second silicon-based material described above, and for example, may further include one or more of a tin-based material, lithium titanate, and the like.

In some embodiments, the intermediate region 1023 of the negative electrode film layer may further include one or more of a tin-based material, lithium titanate, and the like.

In some embodiments, the first region, the second region, and the intermediate region of the negative electrode film layer further optionally include a negative electrode conductive agent and/or a negative electrode binder.

The present application does not particularly limit the type of the negative electrode conductive agent. As an example, the negative electrode conductive agent may include one or more of superconducting carbon, conductive graphite, acetylene black, carbon black, Ketjen black, a carbon dot, a carbon nanotube, graphene, and a carbon nanofiber.

The present application does not particularly limit the type of the negative electrode binder. As an example, the negative electrode binder may include one or more of styrene-butadiene rubber (SBR), water-soluble unsaturated resin SR-1B, aqueous acrylic resin (e.g., polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS).

In some embodiments, the first region, the second region, and the intermediate region of the negative electrode film layer further optionally include other auxiliary agents. As an example, other auxiliary agents may include thickeners, such as sodium carboxymethylcellulose (CMC) and PTC thermistor materials.

In some embodiments, the porosity of the negative electrode film layer may be ≥ 15%, optionally 20%-45%. Therefore, this is conducive to enabling the negative electrode film layer to achieve both a high capacity and a suitable pore structure, thereby facilitating the secondary battery to achieve both high energy density and favorable cycle performance and fast-charging performance.

In some embodiments, the porosity of the negative electrode film layer has a meaning well known in the art and can be determined using methods known in the art. An exemplary test method is as follows: a single-side coated and cold-pressed negative electrode plate is used (if a double-side coated negative electrode plate is used, the negative electrode film layer on one side may be wiped off first) and punched into small circular samples with a certain area, and the apparent volume V₁ of the negative electrode plate is calculated. Referring to GB/T24586-2009, an inert gas (e.g., helium or nitrogen) is used as the medium, and the true volume V₂ of the negative electrode plate is measured by gas displacement using a true density analyzer. The porosity of the negative electrode film layer = (V₁ - V₂)/V₁ × 100%. Multiple negative electrode plate samples (e.g., 30 samples) with good appearance and no powder shedding at the edges may be tested, and the mean value of the results is used as the test result, thereby improving the accuracy of the test results. The test instrument may be a Micromeritics AccuPyc II 1340 true density analyzer.

In some embodiments, the compaction density of the negative electrode film layer may be ≥ 1.5 g/cm³, optionally 1.6-1.8 g/cm³. Therefore, this is conducive to enabling the negative electrode film layer to achieve both a high capacity and favorable ionic and electronic transport properties, thereby facilitating the secondary battery to achieve both high energy density and favorable cycle performance and fast-charging performance.

In some embodiments, the compaction density of the negative electrode film layer has a meaning well known in the art and can be measured using methods known in the art. The compaction density of the negative electrode film layer = the surface density of the negative electrode film layer/the thickness of the negative electrode film layer. The thickness of the negative electrode film layer has a meaning well known in the art and can be measured using methods known in the art, for example, using a micrometer (e.g., Mitutoyo293-100, with precision of 0.1 µm).

In some embodiments, the surface density of the negative electrode film layer may be ≥ 7 mg/cm², optionally 9-30 mg/cm². Therefore, this is conducive to enabling the negative electrode film layer to achieve both a high capacity and favorable ionic and electronic transport properties, thereby facilitating the secondary battery to achieve both high energy density and favorable cycle performance and fast-charging performance.

In some embodiments, the surface density of the negative electrode film layer has a meaning well known in the art and can be measured using methods known in the art. For example, a single-side coated and cold-pressed negative electrode plate may be used (if a double-side coated negative electrode plate is used, the negative electrode film layer on one side may be wiped off first) and punched into small circular samples with an area of S₁. The sample is weighed, and the weight is recorded as M₁. The negative electrode film layer of the above weighed negative electrode plate is then wiped off, and the weight of the negative electrode current collector is measured and recorded as M₀. The surface density of the negative electrode plate = (M₁ - M₀)/S₁.

The silicon-carbon composite material and the silicon-oxygen-based material used in the present application can both be commercially available or can be prepared by the following method.

In some embodiments, the method for preparing the silicon-oxygen-based material includes the following steps:
providing a raw material containing silicon element and oxygen element;
heating the raw material to 1100-1500 °C by a vapor deposition method to form vapor, and then cooling the vapor to 700-900 °C to form a deposit; and
crushing the deposit to obtain a crushed product.

In some embodiments, the method for preparing the silicon-oxygen-based material may further include a step of doping with an alkali metal. Optionally, in the alkali metal doping reaction step, the coated product is mixed with an alkali metal source (e.g., a lithium source, a sodium source, or a potassium source) at a mass ratio of 100:6-11 (e.g., 100:6-7, 100:7-8, 100:8-9, 100:9-10, or 100:10-11). Optionally, the heating rate during the alkali metal doping reaction is 0.5-1.5 °C/min, 1-2 °C/min, 1.5-2.5 °C/min, 2-3 °C/min, 2.5-3.5 °C/min, 3-4 °C/min, 3.5-4.5 °C/min, or 4-5 °C/min. Optionally, the heating temperature during the alkali metal doping reaction is 450-500 °C/min, 500-550 °C/min, 550-600 °C/min, 600-650 °C/min, 650-700 °C/min, 700-750 °C/min, or 750-800 °C/min. Optionally, the holding time during the alkali metal doping reaction is 3-4 h, 4-5 h, 5-6 h, 6-7 h, 7-8 h, 8-9 h, or 9-16 h.

In some embodiments, the method for preparing the silicon-oxygen-based material may further include a step of doping with an alkaline earth metal. Optionally, the alkaline earth metal doping step includes: formulating the raw material to additionally contain alkaline earth metal elements (e.g., Mg, and Ca), with the content of the alkaline earth metal element in the raw material being optionally 7-10 wt% (e.g., 7-8 wt%, 8-10 wt%, or 9-10 wt%); then heating the raw material to 1100-1500 °C (e.g., 1100-1400 °C, 1100-1300 °C, 1100-1200 °C, 1200-1500 °C, 1300-1500 °C, or 1400-1500 °C) using the vapor deposition method to form vapor, followed by cooling the vapor to 700-900 °C (e.g., 750-850 °C) to form a deposit. Based on this scheme, the silicon-based negative electrode active material prepared exhibits improved initial coulombic efficiency and/or cycle life.

In some embodiments, the raw material includes elemental silicon, which provides Si element to the raw material.

In some embodiments, the raw material includes silicon oxide, which provides O element to the raw material.

In some embodiments, the raw material includes elemental silicon and silicon dioxide, and the mass ratio of elemental silicon to silicon dioxide is 0.8-1.2:1, e.g., 1:1.

In some embodiments, the vapor deposition is performed in an atmosphere with an absolute pressure of not more than 40 Pa.

In some of the above embodiments, the operation of crushing the deposit includes performing coarse crushing, fine crushing, and grading of the deposit based on preset parameters of the volume average particle size (Dv50) and specific surface area of the target product to obtain a product meeting the preset parameters. In some embodiments, any method and device known in the art may be used for the crushing and grading of the deposit, such as a grinder or an integrated jet mill and classifier.

In some embodiments, the method for preparing the silicon-oxygen-based material further includes the following step: coating the silicon-oxygen-based material, such as carbon coating.

In some embodiments, the method for preparing the silicon-carbon composite material includes the following steps:
providing a carbonaceous precursor (e.g., biomass precursor or resin precursor), and coconut shell-based or starch-based biomass porous carbon;
carbonizing the carbonaceous precursor in a nitrogen atmosphere at a temperature of 600-1000 °C for 2-10 h to obtain porous carbon; and heating the porous carbon in an atmosphere containing a silicon source gas to deposit elemental silicon on the porous carbon, thereby obtaining the silicon-carbon composite material.

In some embodiments, prior to depositing elemental silicon on the porous carbon, the biomass is subjected to carbonization and the product is subjected to porosity treatment to obtain porous carbon. Optionally, the volume average particle size (Dv50) of the porous carbon is 5-17 µm, e.g., 5-13 µm. Optionally, the BET specific surface area of the porous carbon is 100-2000 m²/g, e.g., 1000-1500 m²/g.

In some embodiments, the silicon source gas includes silane gas, such as monosilane. The silane gas thermally decomposes into elemental silicon and hydrogen gas, and the elemental silicon is deposited on the porous carbon to form the silicon-carbon composite material.

In some embodiments, the porous carbon is heated in an atmosphere containing the silicon source gas to 400-600 °C, e.g., 450-550 °C.

In some embodiments, the method for preparing the silicon-carbon composite material further includes the following step: coating the silicon-carbon composite material, such as carbon coating.

In some embodiments, the above carbon coating process includes the following operations: placing the target to be coated (e.g., the silicon-oxygen-based material or the silicon-carbon composite material) in a deposition chamber containing a carbon source gas, and heating the chamber to carbonize and deposit the carbon source gas, thereby forming a carbon-containing coating layer.

In some embodiments, the carbon source gas accounts for 5-15% of the total gas volume in the deposition chamber. The deposition chamber may further contain a non-oxidizing gas, such as nitrogen or an inert gas.

In some embodiments, the carbon source gas includes one or more of the following: acetylene, methane, ethylene, propane, ethane, propylene, propyne, and toluene.

In some embodiments, during the carbon coating process, the heating temperature is 600-1000 °C.

In some embodiments, during the carbon coating process, the heating duration is 1-6 h.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector can be fabricated by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, the negative electrode film further optionally includes a binder. As an example, the binder may include at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film further optionally includes a conductive agent. As an example, the conductive agent may include at least one of superconducting carbon, acetylene black, carbon black, Ketjen black, a carbon dot, a carbon nanotube, a graphene, and a carbon nanofiber.

In some embodiments, the negative electrode film further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

The negative electrode plate does not exclude additional functional layers other than the negative electrode film layer. For example, in some embodiments, the negative electrode plate of the present application further includes a conductive bottom coating (e.g., composed of a conductive agent and a binder) disposed on the surface of the negative electrode current collector and positioned between the negative electrode current collector and the negative electrode film layer; in some embodiments, the negative electrode plate of the present application further includes a protective layer covering the surface of the negative electrode film layer.

The negative electrode current collector is provided with two surfaces opposite to each other in its own thickness direction, and the negative electrode film layer is disposed on any one or both of the two opposite surfaces of the negative electrode current collector. It should be noted that the parameters of the negative electrode film layer provided in the present application (e.g., compaction density, surface density, and porosity) refer to the parameters of the negative electrode film layer on one side of the negative electrode current collector. When the negative electrode film layer is disposed on both sides of the negative electrode current collector, if the parameters of the negative electrode film layer on either side meet the requirements of the present application, it shall be considered to fall within the protection scope of the present application.

In some embodiments, various parameter tests for the first active material, the second active material, or the negative electrode film layer may be performed by sampling from a prepared secondary battery according to the following steps.

The secondary battery is subjected to a discharge process (for safety reasons, the secondary battery is typically in a fully discharged state). After disassembly of the secondary battery, the negative electrode plate is extracted and immersed in dimethyl carbonate for a certain period (e.g., 2-10 h). The negative electrode plate is then removed and subjected to a drying process at a specified temperature and duration (e.g., 60 °C for more than 4 h). After drying, the negative electrode plate is collected. At this point, samples can be taken from the dried negative electrode plate to test the above parameters related to the negative electrode film layer, such as the surface density, compaction density, and porosity of the negative electrode film layer.

The dried negative electrode plate is then baked at a specified temperature and duration (e.g., 400 °C for more than 2 h). From the baked negative electrode plate, a region is randomly selected, and sampling of the second active material is first performed (e.g., using a blade to scrape for powder collection) from the second region of the negative electrode film layer. The same method is then used to sample the first active material from the first region of the negative electrode film layer. The collected first active material and second active material are separately sieved (e.g., using a 200-mesh sieve), thereby ultimately obtaining first active material and second active material samples that can be used to test the material parameters of the present application described above.

### [Positive Electrode Plate]

In some embodiments, a positive electrode plate generally includes a positive electrode current collector and a positive electrode film disposed on at least one surface of the positive electrode current collector, and the positive electrode film includes a positive electrode active material.

As an example, the positive electrode current collector has two surfaces opposite to each other in its own thickness direction, and the positive electrode film is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material substrate and a metal layer formed on at least one surface of the polymer material substrate. The composite current collector can be formed by forming a metal material (aluminum, aluminum alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, the positive electrode film further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode film further optionally includes a conductive agent. As an example, the conductive agent may include at least one of superconducting carbon, acetylene black, carbon black, Ketjen black, a carbon dot, a carbon nanotube, a graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

### [Positive Electrode Active Material]

In some embodiments, a positive electrode active material for use in secondary batteries known in the art may be used as the positive electrode active material.

As an example, the positive electrode active material may include at least one of the following materials: a lithium-containing phosphate with an olivine structure, a lithium transition metal oxide, and respective modified compounds thereof. However, the present application is not limited to these materials, and other traditional materials that can be used as positive electrode active materials for batteries may also be used. These positive electrode active materials may be used alone or in combination of two or more. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.85}Co_{0.15}Al_{0.05}O₂), and modified compounds thereof. Examples of the lithium-containing phosphate with an olivine structure may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

### [Electrolyte]

The electrolyte conducts ions between the positive electrode plate and the negative electrode plate. The present application has no specific restrictions on the type of the electrolyte, which can be selected according to needs. For example, the electrolyte may be liquid, gel, or all solid.

In some embodiments, the electrolyte is liquid and includes an electrolyte salt and a solvent.

In some embodiments, the electrolyte salt includes sodium perchlorate, sodium hexafluorophosphate, sodium tetrafluoroborate, and sodium hexafluoroarsenate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolytic solution further optionally includes an additive. As an example, the additive may include a negative electrode film-forming additive, a positive electrode film-forming additive, and may also include an additive capable of improving certain performance of the battery, such as an additive for improving the overcharge performance of the battery, an additive for improving the high- or low-temperature performance of the battery, or the like.

### [Separator]

In some embodiments, the secondary battery further includes a separator. The present application does not particularly limit the type of the separator, and any porous-structure separator known to have good chemical stability and mechanical stability may be selected and used.

In some embodiments, the separator may be made of a material including at least one of glass fiber, non-woven fabric, polyethylene, polypropylene, and polyvinylidene fluoride. The separator may be a single-layer film or a multi-layer composite film, and there is no particular limitation on this. When the separator is a multi-layer composite film, the materials of the layers may be the same or different, and there is no particular limitation on this.

In some embodiments, the positive electrode plate, the negative electrode plate, and the separator may be manufactured into an electrode assembly through a winding process or a stacking process.

In some embodiments, the secondary battery may include an outer packaging. The outer packaging can be used for packaging the electrode assembly and electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, and examples of the plastic may include polypropylene, polybutylene terephthalate, polybutylene succinate, and the like.

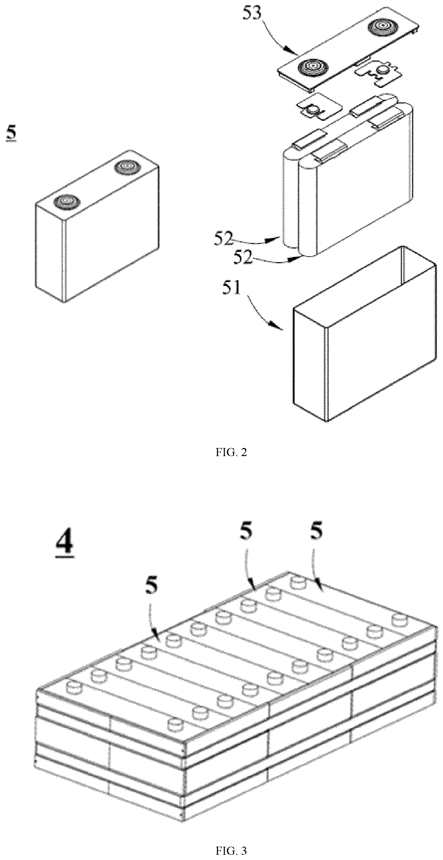

The present application does not particularly limit the shape of the secondary battery, and it may have a cylindrical shape, a prismatic shape, or any other shape. For example, FIG. 2 shows a secondary battery 5 having a prismatic structure as one example.

In some embodiments, referring to FIG. 2, the outer packaging of the secondary battery 5 may include a housing 51 and a cover plate 53. The housing 51 may include a bottom plate and a side plate connected to the bottom plate, and the bottom plate and the side plate define, in an enclosing manner, an accommodating cavity. The housing 51 is provided with an opening communicating with the accommodating cavity, and the cover plate 53 is capable of lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution is infiltrated into the electrode assembly 52. The number of the electrode assembly 52 included in the secondary battery 5 may be one or more, and those skilled in the art can select the number according to specific and actual needs.

In some embodiments, the secondary battery may be assembled into a battery module. The number of secondary batteries included in the battery module may be one or more, and the specific number may be selected by those skilled in the art based on the use and capacity of the battery module.

FIG. 3 shows a battery module 4 as one example. Referring to FIG. 3, in the battery module 4, a plurality of secondary batteries 5 may be sequentially arranged in a length direction of the battery module 4. Certainly, the arrangement may also be in any other manner. Further, the plurality of secondary batteries 5 may be fixed by a fastener.

Optionally, the battery module 4 may further include a shell having an accommodating space in which the plurality of secondary batteries 5 are accommodated.

In some embodiments, the battery module described above may also be assembled into a battery pack. The number of battery modules included in the battery pack may be one or more, and the specific number may be selected by those skilled in the art based on the use and capacity of the battery pack.

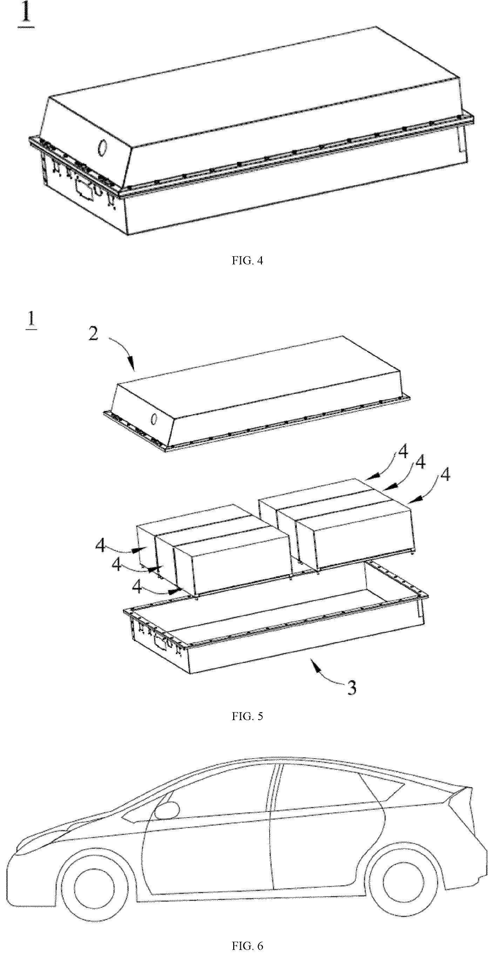

FIG. 4 and FIG. 5 show a battery pack 1 as one example. Referring to FIG. 4 and FIG. 5, the battery pack 1 may include a battery case and a plurality of battery modules 4 arranged in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

In addition, the present application further provides an electric device. The electric device includes at least one of the secondary battery, the battery module, or the battery pack provided in the present application. The secondary battery, the battery module, or the battery pack may be used as a power source for the electric device, and they may also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As the electric device, a secondary battery, a battery module, or a battery pack may be selected based on its use requirements.

FIG. 6 shows an electric device as one example. The electric device is a pure electric vehicle, a hybrid electric vehicle, a plug-in hybrid electric vehicle, or the like. To meet the requirements of the electric device for high power and high energy density of the secondary battery, the battery pack or the battery module may be used.

Hereinafter, examples of the present application are described. The examples described below are illustrative and are merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

### Example E1

### Preparation of negative electrode plate

First slurry: A first negative electrode active material (with a mass ratio of silicon-oxygen-based material to first carbon-based material of 25%:75%), a conductive agent carbon nanotube, a thickener sodium carboxymethylcellulose (CMC), and a binder styrene-butadiene rubber (SBR) were mixed at a mass ratio of 96.7%:0.5%:1.0%:1.8%, respectively. Deionized water was then added as a solvent, and the mixture was stirred in a vacuum mixer until a uniform system was obtained, such that a first slurry was obtained. The silicon-oxygen-based material had a silicon content of 48 wt%, a carbon content of 4 wt%, an oxygen content of 40 wt%, and a magnesium content of 8%; a tap density of 1.18 g/cm³; a powder resistance of 0.3 Ω•cm under a pressure of 16 MPa, a volume distribution particle size Dv50 of 6.5 µm, a volume distribution particle size Dv90 of 18 µm, and a particle size distribution (Dv90-Dv10)/Dv50 of 1.2. The silicon-oxygen-based material included magnesium silicate, and the silicon-oxygen-based material satisfied the following conditions: in the XRD diffraction pattern, the full width at half maximum of the diffraction peaks corresponding to the silicate was 0.4°; the crystallite size of the magnesium silicate was 17 nm. The first carbon-based material was artificial graphite, and artificial graphite in the form of primary particles accounted for 80% in the first carbon-based material. The volume particle size Dv50 was 18 µm, and the particle size distribution (Dv90-Dv10)/Dv50 was 1.2, and the BET specific surface area was 2.3 m²/g.

Second slurry: A second negative electrode active material (with a mass ratio of silicon-carbon composite material to second carbon-based material of 18%:82%), a conductive agent carbon nano, a thickener sodium carboxymethylcellulose (CMC), and a binder styrene-butadiene rubber (SBR) were mixed at a mass ratio of 98%:0.5%:1.0%:1.5%, respectively. Deionized water was then added as a solvent, and the mixture was stirred in a vacuum mixer until a uniform system was obtained, such that a second slurry was obtained. The values of A2 are shown in Table 1. The silicon-carbon composite material had a silicon content of 46 wt%, a carbon content of 49 wt%, an oxygen content of 5 wt%, a tap density of 0.94 g/cm³; a powder resistance of 1.46 Ω•cm under a pressure of 16 MPa, an initial coulombic efficiency of 92%, a volume distribution particle size Dv50 of 8.5 µm, a volume distribution particle size Dv90 of 27 µm, and a particle size distribution (Dv90-Dv10)/Dv50 of 1.4. The second carbon-based material was artificial graphite, and artificial graphite in the form of secondary particles accounted for 70% in the second carbon-based material. The volume particle size Dv50 was 16 µm, and the particle size distribution (Dv90-Dv10)/Dv50 was 1.2, and the BET specific surface area was 1.5 m²/g.

Negative electrode plate: A copper foil was provided as the current collector. The copper foil was coated with the first slurry and the second slurry simultaneously, such that the copper foil was coated with the first slurry to form the first region, and the first region was coated with the second slurry to form the second region. Subsequently, processes such as drying, cold pressing, edge trimming, slitting, and cutting were performed to obtain the negative electrode plate.

### Preparation of positive electrode plate

A positive electrode active material lithium nickel cobalt manganese oxide (LiNi_{0.8}Co_{0.1}Mn_{0.1}O₂), a conductive agent Super P, and a binder polyvinylidene fluoride (PVDF) were mixed at a mass ratio of 97%:1.5%:1.5%. N-methylpyrrolidone (NMP) was added as a solvent, and the mixture was stirred in a vacuum mixer until a uniform system was obtained, such that a positive electrode slurry was obtained. The positive electrode current collector, an aluminum foil, was uniformly coated with the positive electrode slurry, followed by drying, cold pressing, edge trimming, slitting, and cutting to obtain a positive electrode plate for later use.

### Preparation of electrolytic solution

The organic solvent was a mixture of ethylene carbonate (EC), ethyl methyl carbonate (EMC), and diethyl carbonate (DEC), with a volume ratio of EC, EMC, and DEC of 20%:20%:60%. In an argon-atmosphere glove box with a moisture content of < 10 ppm, a thoroughly dried lithium salt (LiPF₆) was dissolved in the above organic solvent, followed by the addition of a 10 wt% additive fluoroethylene carbonate (FEC). The mixture was stirred uniformly to obtain an electrolytic solution. The lithium salt concentration in the electrolytic solution was 1 mol/L.

### Separator

A polypropylene separator was used.

### Assembly of full battery

The above positive electrode plate, separator, and negative electrode plate were sequentially stacked, with the separator positioned between the positive electrode plate and negative electrode plate to provide isolation. The stack was then wound into an electrode assembly, and tabs were welded. The electrode assembly was placed into an outer packaging, and the above electrolytic solution was injected before sealing. Subsequently, processes such as resting, hot and cold pressing, formation, and shaping were performed to obtain a lithium-ion battery. The battery had a dimension of 135 mm × 72 mm × 60 mm.

The preparation method of Examples E2-E12 was similar to that of Example E1, except for the differences listed in Table 1 below.

### Comparative Example D1

The preparation method of Comparative Example D1 was similar to that of Example E1, except that the coating positions of the first slurry and the second slurry were swapped (i.e., the copper foil was coated with the second slurry to form the first region, and the first region was coated with the first slurry to form the second region).

### II. Test method

### 2.1 Fast-charging performance

At 25 °C, the batteries of the above examples and comparative examples were subjected to a first charge and discharge cycle at 1 C (i.e., a current at which the theoretical capacity can be fully discharged within 1 h). Specifically, the batteries were charged at a constant current of 1 C to a charge cut-off voltage V1, followed by constant voltage charging until the current dropped to ≤ 0.05 C. The batteries were left to stand for 5 min, and then discharged at a constant current of 0.33 C to a discharge cut-off voltage V2. The actual capacity was recorded as C0. Subsequently, the batteries were charged sequentially at constant currents of 2.8 C0, 3 C0, 3.2 C0, 3.5 C0, 3.8 C0, 4.1 C0, 4.4 C0, 4.7 C0, 5 C0, 5.3 C0, 5.6 C0, and 5.9 C0 until reaching either the full-battery charge cut-off voltage V1 or the 0V negative electrode cut-off potential, whichever occurred first. After each charge cycle, the batteries were discharged at 1 C0 to the full-battery discharge cut-off voltage V2, and the negative electrode potential corresponding to 10%, 20%, 30%, ..., 80% state of charge (SOC) was recorded for different charging rates. A charging rate-negative electrode potential curve was plotted for different SOC states, and linear fitting was performed to determine the charging rate corresponding to a negative electrode potential of 0 V at different SOC states. The charging rates were defined as the charge windows at the given SOC state and were recorded as C10%SOC, C20%SOC, C30%SOC, C40%SOC, C50%SOC, C60%SOC, C70%SOC, and C80%SOC. The charging time T (in minutes) required for the battery to charge from 10% SOC to 80% SOC was calculated according to the formula: (60/C20%SOC + 60/C30%SOC + 60/C40%SOC + 60/C50%SOC + 60/C60%SOC + 60/C70%SOC + 60/C80%SOC ) × 10%. A shorter time demonstrates more excellent fast-charging performance of the battery.

### 2.2 Cycle performance

At 25 °C, the secondary batteries prepared in the examples and comparative examples were charged ata constant current of 0.5 C to a charge cut-off voltage of 4.2 V, followed by charging at a constant voltage of 4.2 V to a current of 0.05 C. The batteries were left to stand for 5 min, then discharged at a constant current of 0.5 C to a discharge cut-off voltage of 2.8 V, and left to stand for 5 min. This process constituted one charge-discharge cycle. This charge-discharge cycle was repeated until the capacity retention rate of the battery declined to 80%, and the corresponding cycle number was recorded as the cycle life of the battery at 25 °C.

**Table 2**

| | First region | | Second region | | | Ratio | Performance | |
|---|---|---|---|---|---|---|---|---|
| Number | Silicon-oxygen-based material | Silicon-oxygen-based material | Silicon-carbon composite material | Silicon-carbon composite material | Al+A2 | A₂/A₁ | Cycle life | Fast-charging performance |
| | Content A₁ | Dv50/µm | Content A₂ | Dv50/µm | | | Number of cycles | min |
| Example 1 | 10% | 6.5 | 5% | 8.5 | 15% | 0.50 | 1205 | 14.2 |
| Example 2 | 10% | 6.5 | 20% | 8.5 | 30% | 2.00 | 1053 | 17.5 |
| Example 3 | 15% | 6.5 | 5% | 8.5 | 20% | 0.33 | 1104 | 14.3 |
| Example 4 | 15% | 6.5 | 10% | 8.5 | 25% | 0.67 | 1084 | 16.1 |
| Example 5 | 15% | 6.5 | 20% | 8.5 | 35% | 1.33 | 957 | 18.8 |
| Example 6 | 20% | 6.5 | 5% | 8.5 | 25% | 0.25 | 985 | 15.2 |
| Example 7 | 20% | 6.5 | 10% | 8.5 | 30% | 0.50 | 965 | 16.7 |
| Example 8 | 20% | 6.5 | 15% | 8.5 | 35% | 0.75 | 937 | 17.1 |
| Example 9 | 20% | 6.5 | 20% | 8.5 | 40% | 1.00 | 905 | 17.5 |
| Example 10 | 25% | 6.5 | 10% | 8.5 | 35% | 0.40 | 917 | 16.9 |
| Example 11 | 25% | 6.5 | 5% | 8.5 | 30% | 0.20 | 905 | 16.4 |
| Example 12 | 25% | 6.5 | 15% | 8.5 | 40% | 0.60 | 887 | 17.6 |
| Example 13 | 25% | 6.5 | 20% | 8.5 | 45% | 0.80 | 788 | 18.5 |
| Example 14 | 30% | 6.5 | 15% | 8.5 | 45% | 0.50 | 723 | 18.1 |
| Example 15 | 20% | 8.5 | 10% | 6.5 | 30% | 0.50 | 801 | 17.0 |
| Comparative Example 1 | First region | | Second region | | Sum | Ratio | Performance | |
| | Silicon-carbon composite material | Silicon-carbon composite material | Silicon-oxygen-based material | Silicon-oxygen-based material | B₁+B₂ | B₁/B₂ | Cycle life | Fast-charging performance |
| | Content B₁ | Dv50/µm | Content B₂ | Dv50/µm | | | Number of cycles | min |
| | 10% | 8.5 | 20% | 6.5 | 15% | 0.72 | 708 | 15.8 |

| | | | | | | | | |
|---|---|---|---|---|---|---|---|---|
| Note: A₁ represents the content of the silicon-oxygen-based material in the first active material of the first region. A₂ represents the content of the silicon-carbon composite material in the second active material of the second region. Dv50 represents the volume average particle size. | | | | | | | | |

From the test results in Table 2, it is evident that by optimizing the structure of the negative electrode plate to enable the first active material in the first region to include a silicon-oxygen-based material and the second active material in the second region to include a silicon-carbon composite material, the secondary batteries exhibits improved cycle life and fast-charging performance.

Furthermore, the results in Table 2 indicate that by further optimizing the structure of the negative electrode plate, such as maintaining the mass percentage A1 of silicon-oxygen-based material in the first active material and A2 of silicon-carbon composite material in the second active material within a specific range, the fast-charging performance and/or the cycle performance of the secondary battery can be further enhanced. For example, A1 is not more than 25 wt %, and A2 is not more than 20 wt %. To further optimize the energy density of the battery, A1 may be 10 wt%-25 wt%, and A2 may be 5 wt%-20 wt%. For example, although the cycle performance and the rate capability in Example 1 are relatively better compared to other examples, the improvement in battery energy density is limited due to the lower content of added silicon-based materials.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. A secondary battery, comprising a negative electrode plate, wherein the negative electrode plate comprises a negative electrode current collector and a negative electrode film layer, the negative electrode film layer has a first surface proximal to the negative electrode current collector and a second surface arranged opposite to the first surface, a thickness of the negative electrode film layer is denoted as H, a region extending from the first surface of the negative electrode film layer to a thickness range of 0.3 H is defined as a first region of the negative electrode film layer, a region extending from the second surface of the negative electrode film layer to a thickness range of 0.3 H is defined as a second region of the negative electrode film layer,
the first region comprises a first active material, the second region comprises a second active material,
the first active material comprises a silicon-oxygen-based material, and the second active material comprises a silicon-carbon composite material.

2. The secondary battery according to claim 1, wherein a mass percentage of the silicon-oxygen-based material in the first active material is denoted as A1, and a mass percentage of the silicon-carbon composite material in the second active material is denoted as A2, wherein A2/A1 ≤ 2, and optionally, 0.2 ≤ A2/A1 ≤ 0.8.

3. The secondary battery according to claim 1 or 2, wherein the mass percentage of the silicon-oxygen-based material in the first active material is less than or equal to 30 wt%, optionally 10 wt% to 25 wt%; and/or the mass percentage of the silicon-carbon composite material in the second active material is less than or equal to 25 wt%, optionally 5 wt% to 20 wt%.

4. The secondary battery according to any one of claims 1 to 3, wherein the secondary battery satisfies at least one of the following (1) to (5):
(1) a volume average particle size Dv50 of the silicon-carbon composite material is greater than a volume average particle size Dv50 of the silicon-oxygen-based material;
(2) a powder compaction density of the silicon-carbon composite material tested under a pressure of 3 × 10⁴ N is less than that of the silicon-oxygen-based material tested under a pressure of 3 × 10⁴ N;
(3) a tap density of the silicon-carbon composite material is less than that of the silicon-oxygen-based material;
(4) a specific surface area of the silicon-carbon composite material is greater than that of the silicon-oxygen-based material; and
(5) a powder resistivity of the silicon-carbon composite material tested under a pressure of 16 MPa is greater than that of the silicon-oxygen-based material tested under a pressure of 16 MPa.

5. The secondary battery according to any one of claims 1 to 6, wherein the silicon-carbon composite material comprises a carbon matrix and a silicon-based material disposed in the carbon matrix.

6. The secondary battery according to any one of claims 1 to 8, wherein the silicon-carbon composite material satisfies at least one of the following (1) to (7):
(1) an initial coulombic efficiency of the silicon-carbon composite material is ≥ 90 wt%, optionally 91 wt% to 94 wt%;
(2) a volume particle size Dv50 of the silicon-carbon composite material is 3 µm to 15 µm, optionally 5 µm to 12 µm;
(3) a volume particle size Dv90 of the silicon-carbon composite material is ≤ 60 µm, optionally 20 µm to 40 µm;
(4) a particle size distribution (Dv90-Dv10)/Dv50 of the silicon-carbon composite material is 1.0 to 3.0, optionally 1.0 to 2.0;
(5) a BET specific surface area of the silicon-carbon composite material is less than or equal to 20 m²/g, optionally 1 m²/g to 10 m²/g;
(6) a powder resistivity of the silicon-carbon composite material under a pressure of 16 MPa is ≤ 300 Ω·cm, optionally ≤ 50 Ω·cm;
(7) a tap density of the silicon-carbon composite material is 0.8 g/cm³ to 1.0 g/cm³, optionally 0.9 g/cm³ to 1.0 g/cm³;
(8) a silicon element content in the silicon-carbon composite material is greater than or equal to 30 wt%, optionally 40 wt% to 60 wt%;
(9) a carbon element content in the silicon-carbon composite material is greater than or equal to 40 wt%, optionally 45 wt% to 60 wt%; and
(10) an oxygen element content in the silicon-carbon composite material is less than or equal to 10 wt%, optionally 1 wt% to 5 wt%.

7. The secondary battery according to any one of claims 1 to 9, wherein the silicon-oxygen-based material comprises a silicate containing an alkali metal or containing an alkaline earth metal.

8. The secondary battery according to any one of claims 1 to 10, wherein the silicon-oxygen-based material comprises a silicate containing an alkali metal, and the silicon-oxygen-based material satisfies the following condition: in an XRD diffraction pattern, a full width at half maximum of diffraction peaks corresponding to the silicate containing an alkali metal is 0.5° to 2.0°; and/or a crystallite size of the silicate corresponding to the silicate containing an alkali metal is 4 nm to 17 nm.

9. The secondary battery according to any one of claims 1 to 10, wherein the silicon-oxygen-based material comprises a silicate containing an alkaline earth metal, and the silicon-oxygen-based material satisfies the following condition: in an XRD diffraction pattern, a full width at half maximum of diffraction peaks corresponding to the silicate containing an alkaline earth metal is 0.3° to 0.6°; and/or a crystallite size of the silicate corresponding to the silicate containing an alkaline earth metal is 12 nm to 20 nm.

10. The secondary battery according to any one of claims 1 to 12, wherein the silicon-oxygen-based material satisfies at least one of the following (1) to (7):
(1) a volume particle size Dv50 of the silicon-oxygen-based material is 3 µm to 20 µm, optionally 5 µm to 15 µm;
(2) a volume particle size Dv90 of the silicon-oxygen-based material is ≤ 60 µm, optionally 10 µm to 25 µm;
(3) a particle size distribution (Dv90-Dv10)/Dv50 of the silicon-oxygen-based material is 1.0 to 2, optionally 1.0 to 1.5;
(4) a BET specific surface area of the silicon-oxygen-based material is 1 m²/g to 6 m²/g, optionally 1 m²/g to 5 m²/g;
(5) a tap density of the silicon-oxygen-based material is 1.05 g/cm³ to 1.25 g/cm³, optionally 1.1 g/cm³ to 1.2 g/cm³;
(6) a silicon element content in the silicon-oxygen-based material is greater than or equal to 40 wt%, optionally 45 wt% to 65 wt%;
(7) an oxygen element content in the silicon-oxygen-based material is greater than or equal to 30 wt%, optionally 30 wt% to 50 wt%; and
(8) a carbon element content in the silicon-oxygen-based material is less than or equal to 8 wt%, optionally 2 wt% to 5 wt%.

11. The secondary battery according to any one of claims 1 to 13, wherein the first active material and/or the second active material further comprises a carbon-based material; optionally, the carbon-based material comprises at least one of artificial graphite, natural graphite, soft carbon, and hard carbon.

12. The secondary battery according to any one of claims 1 to 14, wherein the first active material comprises a first carbon-based material and the second active material comprises a second carbon-based material, and the secondary battery satisfies any one of the following conditions:
(1) the first carbon-based material comprises primary particles, and optionally, the primary particles account for ≥ 70% by number in the first carbon-based material;
(2) the second carbon-based material comprises secondary particles, and optionally, the secondary particles account for ≥ 70% by number in the second carbon-based material;
(3) a volume average particle size Dv50 of the first carbon-based material is smaller than the volume average particle size Dv50 of the second carbon-based material;
(4) a tap density of the first carbon-based material is greater than that of the second carbon-based material; and
(5) a compaction density of the first carbon-based material is greater than that of the second carbon-based material.

13. The secondary battery according to any one of claims 1 to 15, wherein the first carbon-based material satisfies at least one of the following conditions (1) to (7):
(1) a volume particle size Dv50 of the first carbon-based material is 5 µm to 20 µm, optionally 8 µm to 15 µm;
(2) a volume particle size Dv90 of the first carbon-based material is ≤ 50 µm, optionally 25 µm to 40 µm;
(3) a particle size distribution (Dv90-Dv10)/Dv50 of the first carbon-based material is 1.0 to 2.5, optionally 1.0 to 1.8;
(4) a BET specific surface area of the first carbon-based material is 0.5 m²/g to 4 m²/g, optionally 1 m²/g to 3 m²/g;
(5) a tap density of the first carbon-based material is 1.0 g/cm³ to 1.25 g/cm³, optionally 1.1 g/cm³ to 1.2 g/cm³; and
(6) a powder compaction density of the first carbon-based material tested under a pressure of 30000 N is 1.6 g/cm³ to 1.9 g/cm³, optionally 1.65 g/cm³ to 1.8 g/cm³.

14. The secondary battery according to any one of claims 1 to 16, wherein the second carbon-based material satisfies at least one of the following conditions (1) to (7):
(1) a volume particle size Dv50 of the second carbon-based material is 8 µm to 25 µm, optionally 12 µm to 18 µm;
(2) a volume particle size Dv90 of the second carbon-based material is ≤ 60 µm, optionally 35 µm to 50 µm;
(3) a particle size distribution (Dv90-Dv10)/Dv50 of the second carbon-based material is 1.0 to 2.0, optionally 1.0 to 1.5;
(4) a BET specific surface area of the second carbon-based material is 1 m²/g to 5 m²/g, optionally 1 m²/g to 3 m²/g;
(5) a tap density of the second carbon-based material is 0.9 g/cm³ to 1.2 g/cm³, optionally 1.0 g/cm³ to 1.1 g/cm³; and
(6) a powder compaction density of the second carbon-based material tested under a pressure of 30000 N is 1.5 g/cm³ to 1.75 g/cm³, optionally 1.55 g/cm³ to 1.7 g/cm³.

15. The secondary battery according to any one of claims 1 to 17, wherein an intermediate region located between the first region and the second region comprises the silicon-carbon composite material and/or the silicon-oxygen-based material.

16. An electric device, comprising the secondary battery according to claim 18.
